# EUROPEAN PATENT APPLICATION

(11) **EP 2 485 014 A1**
(43) Date of publication of application: **08.08.2012**
(21) Application number: 12460004.0
(22) Date of filing: 03.02.2012
(51) Int. Cl.: G01F 1/44, G01F 1/46, G01F 1/684, G01F 1/696

(54) **Method and meter for the measurement of gas flux in short closed ducts of large cross section area, particularly in boiler air/flue gas and ventilation circuits**

(30) Priority: 03.02.2011 PL 39383611
(71) Applicant: Ostrowski, Piotr, 41-200 Chorzów (PL); Pronobis, Marek, 40-203 Katowice (PL); Kalisz, Sylwester, 44-100 Gliwice (PL); Wejkowski, Robert, 44-153 Smolnica (PL); Remiorz, Leszek, 44-200 Rybnik (PL)
(72) Inventor: Ostrowski, Piotr, 41-200 Chorzów (PL); Pronobis, Marek, 40-203 Katowice (PL); Kalisz, Sylwester, 44-100 Gliwice (PL); Wejkowski, Robert, 44-153 Smolnica (PL); Remiorz, Leszek, 44-200 Rybnik (PL)
(74) Representative: Maslowski, Andrzej

(57) **Abstract**

The method according to the invention consists in that the velocity profile in a flow duct is normalised to a flat profile of average velocity value and that in any chosen point of the known flow area the value of the average velocity is measured by means of a point velocity meter, e.g. a Prandtl tube or a thermoanemometer.

The gas flux meter according to the invention is **characterised in that** it is installed in a short closed duct 1 of rectangular cross section. The normaliser 2 of the flowmeter comprises two reflectively symmetrical walls integrated into the rectangular duct 1. These walls form a constriction in duct 1, that constriction having the shape of a convergent section 3 gradually changing along its length into a duct of only slightly variable cross section 4 and finally into a divergent section 5, said walls being confined by two planar walls 10 of the duct. In one of the planar walls 10 a stub 6 is installed with a position locking means 7 for securing in its operating position a movable point sensor of gas flowmeter 8, e.g. a Prandtl tube or a thermoanemometer, coupled via a signal conveying means to a flow transducer 9.

The gas flux meter may also be used in a short pipe of circular cross section upon installing inside the pipe an axially symmetrical venturi - gas velocity normaliser.

## Description

This invention relates to a method and a meter for measuring gas flux in short closed ducts of large cross section area, particularly in boiler air/flue gas and ventilation circuits.

Measurement of gas flux in a pipeline is one of the basic measurements in technology and many methods are applied to make such measurements. In particular, measurements of gas flux in pipelines up to 1 metre in diameter can be effected using standardised methods of pressure drop measurement across a throttling device (flow constriction methods). These methods require straight flow sections upstream and downstream of the point of measurement, the lengths of said sections being specified in flow measurement standards. In the case of measurement sections of the pipeline being short, the flow measurement standards allow the use of flow straighteners the design of which is indicated in these standards. These flow straighteners, however, induce high pressure drops. In the case of closed ducts of rectangular cross section or in pipelines more than 1 m in diameter, the standards recommend measurements to be made by means of a Prandtl tube at n*m points of flow area division, which in the instance of operational measurents is a nonstationary method and is hardly practicable.

The object of this invention is to provide a method and a meter design for the measurement of gas flux in industrial plants, which would fill the gap in measurement feasibility mentioned above.

The method of measurement according to this invention consists in normalising the velocity profile in a flow duct to a flat profile of average velocity value (i.e. gas velocities across the entire stream cross section are quasi-equal to the average velocity), measuring the average velocity value at any chosen location within the stream cross section by means of a point velocity meter, e.g. a Prandtl tube or a thermoanemometer, and computing the value of the fluid/gas flux as the product of the average velocity measured and the cross section area of the duct.

The flux meter according to this invention is **characterised in that** a flow normaliser 2 in the form of a venturi is installed immovably in duct 1, a stub 6 is installed in the wall of the duct and provided with a position locking means 7 for securing a movable point sensor of gas flowmeter 8 in its operating position, that is within the normalised flat velocity profile, whereas the normaliser venturi 2 installed in a duct of rectangular cross section preferably consists of two reflectively symmetrical walls forming a converging part 3, a transitional part 4 of only slightly variable cross section and a diverging part 5, the said parts confined by planar walls 10 of duct 1, and whereas the normaliser venturi 2 installed in a duct of circular cross section preferably consists of an axially symmetrical venturi forming a converging part 3, a transitional part 4 of only slightly variable cross section and a diverging part 5.

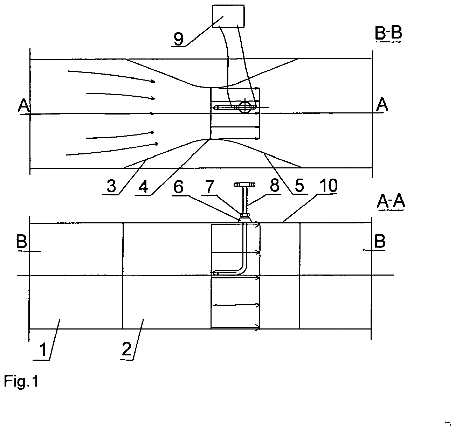

One embodiment of the invention is illustrated in the drawing, which shows a schematic of a gas flowmeter installed in a short closed duct 1 of rectangular cross section. Normaliser 2 of the flowmeter comprises two reflectively symmetrical walls integrated into the rectangular duct 1. These walls form a constriction in duct 1, that constriction gradually changing along its length from a convergent section 3 to a section of quasi-constant cross section 4 to a divergent section 5, said walls being confined by two planar walls 10 of the duct. In one of the planar walls 10 a stub 6 is installed with a position locking means 7 for securing in its operating position a movable point sensor of gas flowmeter 8, e.g. a Prandtl tube or a thermoanemometer, coupled via a signal conveying means to a flow transducer 9.

The gas flux meter may also be used in a short pipe of circular cross section upon installing inside the pipe an axially symmetrical venturi - gas velocity normaliser.

## Claims

1. A method according to the invention, **characterised in that** in a flow duct a velocity profile is normalised to a flat profile of average velocity value (i.e. gas velocities across the entire stream cross section are quasi-equal to the average velocity) and the average velocity value is measured at any chosen location within the stream cross section by means of a point velocity meter, e.g. a Prandtl tube or a thermoanemometer, and the value of the gas flux is computed as the product of the average velocity measured and the flat profile flow area.

2. A gas flux meter according to the invention, **characterised in that** a flow normaliser 2 in the form of a venturi is installed immovably in duct 1, and a stub 6 is installed in the wall of the duct and provided with a position locking means 7 for securing a movable point sensor of gas flowmeter 8 in its operating position, i.e. within the normalised flat velocity profile.

3. The gas flux meter according to claim 2, **characterised in that** the flow normaliser 2 installed in a duct of rectangular cross section comprises two reflectively symmetrical walls forming a converging part 3, a transitional part 4 of only slightly variable cross section and a diverging part 5, the said parts confined by planar walls 10 of duct 1

4. The gas flux meter according to claim 2, **characterised in that** the flow normaliser 2 installed in a duct of circular cross section has the form of an axially symmetrical venturi comprising a converging part 3, a transitional part 4 of only slightly variable cross section and a diverging part 5.
